# EUROPEAN PATENT APPLICATION

(11) **EP 1 354 910 A2**
(43) Date of publication of application: **22.10.2003**
(21) Application number: 03252115.5
(22) Date of filing: 03.04.2003
(51) Int. Cl.: C08J 3/12, C08F 283/00, C08L 101/00

(54) **Thermoplastic polymer filled pastes**

(30) Priority: 03.04.2002 US 116087
(71) Applicant: 3D SYSTEMS, INC., Valencia, California 91355 (US)
(72) Inventor: Moussa, Khalil M., Stevenson Ranch, CA 91381 (US)
(74) Representative: Howe, Steven

(57) **Abstract**

What is disclosed is a process for making small thermoplastic polymer particles comprising the steps of:
(1) dissolving at least one thermoplastic polymer in a solvent, wherein the solids content in the polymer solution is about 0.5% to about 10% by weight; and
(2) spray drying the polymer solution to form thermoplastic polymer particles having about 0.5 to about 10 microns average particle size;
and a paste composition for use in a solid freeform fabrication process employing the thermoplastic polymer particles.

## Description

### BACKGROUND OF THE INVENTION

### 1. Field of the Invention

The present invention relates to a particular process for making either unfunctionalized or functionalized small thermoplastic polymer particles and their use in pastes used in rapid prototyping and manufacturing procedures. The procedures are additive in nature and create complex freeform solid objects directly from a computer model without part-specific tooling. Collectively the procedures can be termed solid freeform fabrication. In particular, this invention relates to a particular process for making either unfunctionalized or functionalized small thermoplastic polymer particles that involves first dissolving the thermoplastic polymer in a suitable solvent to form a polymer solution and then spray drying that polymer solution to form very small polymer particles (i.e., from about 0.5 microns to about 10 microns). The present invention also relates to a curable paste composition containing these polymer particles and its use in the formation of three dimensional bodies by solid freeform fabrication procedures, the paste composition containing a homogeneous mixture of (a) a solidifiable binding agent comprised of at least one polymerizable resin, with a viscosity of less than 4000 mPa.s, measured at 25°C; (b) at least one initiator; and (c) at least one specific type of very small thermoplastic particles. The paste may be either photocurable or thermally curable.

### 2. Description of the Relevant Art

The creation of three-dimensional parts with complex shapes in very competitive timeframes by rapid prototyping procedures which make use of stereolithography machines using a photosensitive liquid material which may be cross-linked or polymerized by illumination, by ultraviolet laser scanning for example, so-called powder sintering machines, employing a raw material in the form of a powder, whereby said powder may be locally bonded by a thermal effect, by infrared laser scanning for example, or machines using heating filaments or cutting out sheets, is known in prior art.

In addition to liquids, powders, filaments or sheets, there is another range of particularly interesting materials for rapid prototyping: highly viscous materials which are not deformed by the action of gravity without necessarily being solids, hereinafter referred to as pastes. These pastes are obtained by blending a solid charge in the form of a powder, for example, a mineral, metallic or ceramic powder, into a binding agent comprised of a photosensitive or heat-cured liquid resin, such as an acrylic or epoxy photopolymerizable resin traditionally used in stereolithography. The term paste covers, in particular, materials with a very high viscosity, greater than 10,000 mPa.s or the so-called "marked threshold" materials. A "threshold" material does not flow (zero gradient) as long as the shear limitation applied to it does not exceed a minimum value. A "marked threshold" is considered to be reached when the value of this shear limitation is greater than 20 Newtons per square meter.

For the formation of three-dimensional parts using these pastes, a layering process is employed. The paste is spread in thin layers, with each layer being selectively solidified by a device emitting radiation, a laser, for example, combined with galvanometric mirrors, as in stereolithography or powder sintering.

In order to improve the toughness of three-dimensional parts (as measured by impact, elongation or tensile strength) made by these curable pastes, many toughening agents have been added to the pastes to improve these toughness properties. Such toughness agents previously added include core-shell particles, rubber particles and large size thermoplastic polymer particles (i.e., particles having at least about 70 micron average particle size and made by cryogenic grinding). However, the inclusion of such additives has resulted in a significant drop in tensile modulus that severely limits the usefulness of the resulting curable pastes.

The present invention is directed to a type of filler that can be added to such pastes to give them toughness without this loss of modulus. The present invention also provides a new method for obtaining these new particles.

### BRIEF SUMMARY OF THE INVENTION

Therefore, one aspect of the present invention is directed to a process for making small thermoplastic polymer particles comprising the steps of:
(1) dissolving at least one thermoplastic polymer in a solvent, wherein the solids content in the polymer solution is about 0.5% to about 10% by weight; and
(2) spray drying the polymer solution to form thermoplastic polymer particles having about 0.5 to about 10 microns average particle size.

Another aspect of the present invention is directed to a process for making functionalized small thermoplastic polymer particles comprising the steps of:
(1) dissolving at least one thermoplastic polymer in a solvent, wherein the solids content in the polymer solution is about 0.5% to about 10% by weight;
(2) spray drying the polymer solution to form thermoplastic polymer particles having about 0.5 to about 10 micron average particles; and
(3) reacting the thermoplastic polymer particles with at least one functional monomer or oligomer to form a functionalized thermoplastic polymer.

Other aspects of the present invention are these small size unfunctionalized and functionalized thermoplastic polymer particles as novel compositions-of-matter.

Still another aspect of the present invention is directed to a paste composition useful for a prototyping procedure; comprising
(a) a solidifiable binding agent comprised of at least one polymerizable resin, with a viscosity of less than 4000 mPa.s, measured at 25°C;
(b) at least one initiator, in a concentration greater than 0.1% by mass with respect to the mass of the resin; and
(c) thermoplastic polymer particles having about 0.5 to about 10 microns average particle size, said polymer present in a concentration from about 5 to about 50 percent by weight of the resin.

### DESCRIPTION OF THE PREFERRED EMBODIMENTS

### A. Preparation of Unfunctionalized Thermoplastic Polymer Particles

The small thermoplastic polymer particles of the present invention are made by a combination of dissolving and spray drying steps. The thermoplastic polymer precursor used in these steps may be in the form of pellets or flakes (preferably less than 1 centimeter in average particle size). Also, they preferably have a weight-average molecular weight (M_{w}) from about 20,000 to about 200,000.

The preferred thermoplastic polymer includes polycarbonate, polysulfone, polyamide, polyether imide, polyimide, polyphenylene sulfide and polyether ether ketone. The most preferred thermoplastic polymer is polycarbonate.

In the dissolving step of the present invention, the thermoplastic polymer precursor (preferably pellets or flakes) are placed in a suitable solvent or solvents for sufficient amount of time to dissolve them. This dissolving step may be carried out with conventional agitation means (for example, stirrers and the like) to increase the speed of dissolving.

Any suitable solvent that will dissolve the thermoplastic polymer and also be spray dried may be used in the present invention. The preferred solvents are chloroform, tetrahydrofuran, methylene chloride and N, N-dimethylformamide (depending upon the particular polymer). When polycarbonate is the thermoplastic polymer, chloroform is the preferred solvent.

The polymer is added into the solvent at ambient temperatures so that the solids content (i.e., percentage of polymer to the total weight of solvent and polymer) is from about 0.5% to about 10% by weight. More preferably, the solids content is from about 1% to about 5% by weight. Most preferably, the solids content is from about 3% to about 5% by weight.

It is believed that the lower solids content results in smaller average particle size polymer particles after spray drying. It is also believed that such particles having an average particle size from about 0.5 microns to about 10 microns will impact toughness properties to curable pastes for use for making rapid prototyping parts without a loss of modulus.

In a preferred embodiment of the present invention, polycarbonate pellets or flakes (preferably less than 1 centimeter average particle size) are dissolved at ambient temperatures in chloroform (solids content is preferably about 3% to about 5% by weight). The dissolving is facilitated by stirring and takes about 1 to 2 hours to completely dissolve the polycarbonate.

The resulting thermoplastic polymer solution after the dissolving step is then subjected to a spray drying step. Any suitable spray drying operation that results in the desired particle sizes without adversely effecting the polymer may be used. One suitable spray drying production unit is the SD12.5 Production Unit Spray Dryer available from Niro, Inc. of Columbia, Maryland. The preferred operating conditions of the spray dryer may be selected by the operator of the spray dryer to obtain the desired particle sizes of thermoplastic polymers. Preferably when using polycarbonate, the spray dryer may be operated with a cyclone inlet temperature from about 100°C to about 120°C; a cyclone outlet temperature from about 60°C to about 65°C; an atomization pressure of about 2 to about 5 Bar and an evaporation rate of about 2 to about 20 kilograms per hour.

The spray drying operation will separate most of the solvent from the resulting polymer particles. The solvent will be atomized and can be recycled back to the dissolving step. The polymer particles can be collected on the cyclone and filter of the spray dryer. Generally, larger particles are collected on the cyclone and smaller particles are collected on the filter. Any residual solvent on the particles may be removed if desired by any suitable solid/liquid separation technique. The particles are thus ready for incorporation into the curable paste.

### B. Preparation of Functionalized Thermoplastic Polymer Particles

Besides the unfunctionalized polymer particles discussed above, the present invention also contemplates the use of functionalized thermoplastic polymer particles. The term "functionalized" as used in the present specification and claims refers to the incorporation of a functional or reactive chemical moiety onto the thermoplastic polymer chains that make up the polymer particles. Such functional moieties may be obtained from a functional monomer or oligomer such as ones containing acrylate, methacrylate, diacrylate, dimethacrylate, triacrylate, trimethacrylate or epoxy groups or mixtures thereof. Such functionalized small size thermoplastic polymer particles also provide the desired toughness properties with additional reactivity to the other components in the paste. One preferred type of functional monomer or oligomer are hybrid-type acrylate/epoxy monomers or oligomers (i.e., molecules having both reactive acrylate and epoxy moieties). One particular hybrid-type acrylate/epoxy monomer or oligomer that may be suitable for this reaction is Sartomer SR399 dipentaerythritol pentaacrylate resin available commercially from Cray Valley. Such functional monomers or oligomers preferably have at least two functional groups, one that reacts with the radical groups on the polymer particle and at least one function group that can react with other moieties in the curable paste.

These functionalized thermoplastic polymer particles are prepared by reacting one or more thermoplastic polymers with at least one functional monomer or oligomer. There are two preferred methods of conducting this reaction. One method is to conduct the reacting step in a dry state using electron beam or e-beam radiation to effect the radiation. This can be conducted using a suitable electron beam apparatus. If this dry electron beam reaction is used, it is conducted after the spray drying step (2) discussed above. Exposing the thermoplastic particles to the e-beam radiation under an inert atmosphere such as nitrogen causes the extraction of labile hydrogen or methyl groups from the thermoplastic polymer chains. Then a liquid functionalized monomer or oligomer is added to the solid polymer particles. The reaction occurs immediately upon contacting of the two reactants. After the reaction has ceased, the reaction mixture could be used directly as a component in the curable paste composition. Electron beam radiation equipment is available commercially from Radiation Dynamics Inc. of Edgewood, New York.

The second preferred method is conducted in a solvent using gamma radiation. Like the e-beam method, this gamma radiation method will extract a labile hydrogen or methyl from the polymer backbone and form a radical site. The functionalized monomer or oligomer will then be added to the polymer solution to cause reactions at the radical sites, resulting in the functionalized polymer. If this wet gamma radiation reaction is used, it can be carried out with any suitable gamma radiation equipment. Chloroform is a preferred solvent for this reaction. The reaction preferably employs a 1:1 mole ratio of potential radicals to the monomer and will run at room temperature for about 1 to 2 hours. The reaction mixture is then mixed with the UV curable resin to form a paste.

When making these functionalized small size particles, the dissolving step parameters and spray drying step parameters are generally the same or similar to those used in the making of the unfunctionalized particles as discussed above.

### C. Preparation of Curable Pastes

The paste composition according to the present invention includes (1) a binding agent comprising at least one thermal or photopolymerizable or photosensitive resin, (2) at least one thermal initiation or photoinitiator, and (3) at least one of the thermoplastic polymer particles described above. The binding agent used in this invention preferably presents a viscosity of less than 4000 mPa.s (at 25°C).

The binding agent preferably is either acrylate, epoxy or a hybrid-type acrylate/epoxy resin that are photopolymerizable. One preferred acrylate type resin is a tetra-functional acrylate resin such as ditrimethylol propane tetraacrylate resin, marketed by the company Cray Valley under the trade name "Sartomer SR 355" hereinafter referred to as "SR 355." The low viscosity of this "SR 355" resin on the order of 700 mPa.s, allows for high polymer particle charge rates to be reached and the increased efficiency of the various additives described below, in particular that of a rheological control agent. The tetra-functional nature of this "SR 355" resin makes it highly reactive to ultraviolet radiation, with an appropriate initiator, even when it is highly charged with polymer particles.

One preferred hybrid-type acrylate/epoxy resin is a dipentaerythritol pentaacrylate resin, marketed by the company Cray Valley under the trade name "Sartomer SR 399," which may also be used in the paste composition according to the invention. This resin presents high reactivity, but its high viscosity (10 times more viscous than the above-mentioned resin "SR 355") prevents its use alone without a diluent in the event that the polymeric powder charge exceeds a certain percentage.

One preferred epoxy resin that can be employed in the present invention utilizes about 42 to about 67% by weight of a cycloaliphatic epoxy such as 3,4-epoxycyclohexylmethyl-3',4'-epoxycyclohexylcarboxylate, about 20 to about 30% by weight cyclohexanedimethanoldiglycidilether, about 10 to about 20% by weight polytetrahydrofuran, and about 3 to about 8% by weight of photoinitiator such as a triarylsulfonium salt available from Dow Chemical as UVI 6974.

In order to reduce the viscosity of the resin, it is possible to add a specific quantity of a more fluid resin known as a diluent. This diluent, preferably reactive (that is, it will create a cross-linked network under the influence of the light like the resin), has a viscosity of lower than 100 mPa.s and is incorporated in concentrations of between about 2 and about 20% by mass with respect to the resin. It allows for the increase of the volumetric rate of polymer particles (by a few percentage points) and improves the efficiency of a rheological control agent, which provides the paste with a Bingham fluid type performance (a very high flow threshold). In the case of a highly reactive "SR 355" resin, this may be diluted with about 2 to about 20% of more fluid resins, such as those marketed by the company Cray Valley under the trade name "SR 256" (2-(2-ethoxyethoxy) ethyl acrylate) which has a viscosity of 5 mPa.s or "SR 9003" (neopentyl glycol dipropoxyle diacrylate) which has a viscosity of 17 mPa.s, to provide a resin which remains highly reactive with a viscosity on the order of 400 mPa.s. Other resins more fluid than SR 256 resin, such as those marketed under the trade names "SR 531" (cyclical formal trimethylolpropane acrylate), "SR 454" (trimethylolpropane triethoxylate triacrylate), or "SR 494" (pentaerythritol tetraethoxylate tetraacrylate) may also be used. The composition according to the invention may include a blend of resins containing at least about 50% "SR 355" resin and at most about 50% of more fluid resins used as diluents, in which about 2 to about 20% are reactive resins such as those mentioned above, with the remainder comprising non-reactive resin(s).

The functionality and viscosity of various acrylates useful as resins or diluents are as follows:

| Commercial name of the resin | Functionality | Supplier | Viscosity (cps) @ 25°C |
|---|---|---|---|
| Diacryl 101 | Diacrylate | Akzo | 2150 |
| RPC550 | Diacrylate | RPC | 1500 |
| SR349 | Diacrylate | Cray Valley | 1700 |
| SR454 | Triacrylate | Cray Valley | 70 |
| SR355 | Tétraacrylate | Cray Valley | 700 |
| SR494 | Tétraacrylate | Cray Valley | 150 |
| SR399 | Pentaacrylate | Cray Valley | 14000 |
| SR508 | Diacrylate (diluent) | Cray Valley | 8 |
| SR256 | Monoacrylate (diluent) | Cray Valley | 5 |
| SR9003 | Diacrylate (diluent) | Cray Valley | 17 |

The composition includes an initiation system including an initiator, such as a photoinitiation. In the case of resins sensitive to ultraviolet light, such as the above-mentioned polyacrylate resins, the photoinitiator may be comprised of one of the photoinitiators which absorb the wavelengths of the Argon laser (351-364 nm) marketed by the company Ciba-Geigy under the trade names "Irgacure 369" (2-benzyl-2-dimethylamino-1-(4-morpholinophenyl)-butanone-1), "Irgacure 651" (2, 2'-dimethoxy-2-phenylacetophenol), "Irgacure 1700," "Irgacure 819" or "Darocur 1173." Preferably, the photoinitator belongs to the α-amino-ketone family, since the composition's highest reactivity is obtained with the initiator marketed under the trade name "Irgacure 369." Mixtures of photoinitiators can be used. One suitable mixture is Irgacure 369 (1% wt/resin) and Irgacure 819 (0.2% wt/resin) or any other mixtures that are suitable for energy transfer.

It is also possible to use a resin and a photoinitiator (such as the one marketed under the trade name "Irgacure 784DC" or "Irgacure 1700"), which allows for work with visible light, using a machine equipped with a device emitting rays of light in the visible spectrum.

Another combined resin and photoinitiator is a hybrid epoxy/acrylate resin also containing a triarylsulfonium salt photoinitiator called SOMOS 10120 available from DSM Desotech of New Castle, DE. Generally, the curable paste composition contains about 5 to about 50 parts by weight of the thermoplastic polymer particles; and about 35 to about 95 parts by weight of the combined binding agent resin and photoinitiator.

It is also possible to use a resin and a thermal initiator. An example of a material useful in achieving latent polymerization is an epoxy with a protected amine group that decomposes in response to light or heat. Thermal polymerization is achieved by use of an appropriate thermal initiator, such as a peroxide based initiator. WAZO materials available from E. I. du Pont de Nemours & Company are examples of one type of suitable thermal initiators. Thermal initiators are activated by exposure to infrared (IR) radiation. Other thermal initiators are Azo-bis-iso-butyronitrile thermal initiators available commercially from Electron Microscopy Sciences of Fort Washington, PA and Azo initiators VA-044, VA-057, VA-085, VA-070 and VA-096 available from Wako Specialty Chemicals, Ltd.

Certain salts may also be employed as thermal initiators in order to supply cations which initiate cationic curing upon heating. Onium and pyridinium salts provide cationic species that will initiate thermal curing in epoxide compounds, such as compounds based on styrene oxide moieties linked to organic molecules, oligomers or polymers. N-benzylpyridinium and related quaternary ammonium salts provide acidic species under heating conditions. A key in achieving successful thermal initiation of curing is that the linked moieties do not hinder the cationic polymerization of the epoxy functionality by steric interaction or by the action of a Lewis base. Such reactions are discussed in greater detail in U.S. Pat. No. 6,020,508 issued February 1, 2000. Other routes capable of liberating cationic species that will achieve the ring-opening polymerization of styrene oxides are also known.

The initiation system may also include an activation agent, which allows for the movement of the activation wavelength of the photoinitiator, which, once activated, will react with the resin. As an example, in the case of an ultraviolet photoinitiator, such as Irgacure 369, the activation agent may be chosen from among isopropyl thioxanthone, 1-chloro-4-propoxythioxanthone, or 4-benzoyl-4'-methyldiphenyl sulfide, in combination with a co-initiator such as ethyl p-dimethylaminobenzoate.

The composition of the present invention can optionally contain a cross-linking agent, for example, anhydrides, particularly, dianhydrides of diacids, which may be used with a photoinitiated or thermally initiated reaction. Where utilized in a photoinitiated reaction, thermal post-curing is required. Examples of suitable anhydrides that can be included in the compositions of the present invention are chlorendic anhydride and hexahydrophthalic anhydride. The composition of the present invention can also include two anhydrides, for example, both chlorendic anhydride and hexahydrophthalic anhydride. Compositions in which chlorendic anhydride and hexahydrophthalic anhydride are present in weight ratios of from about 30:70 to about 50:50 are illustrative of a preferred embodiment of the present invention, as are compositions in which chlorendic anhydride and hexahydrophthalic anhydride are present in weight ratios of about 40:60 and those in which chlorendic anhydride and hexahydrophthalic anhydride are present as a eutectic mixture. Other anhydride-functional compounds which are useful in the practice of this invention include any aliphatic or aromatic compound having at least two cyclic carboxylic acid anhydride groups in the molecule. Polymeric anhydrides, such as acrylic polymers having anhydride functionality and having number average molecular weights between 500 and 7,000 are also useful. These are conveniently prepared, as is well known in the art, by the polymerization under free radical addition polymerization conditions of at least one unsaturated monomer having anhydride functionality, such as maleic anhydride, citraconic anhydride, itaconic anhydride, propenyl succinic anhydride, etc., optionally with other ethylenically unsaturated monomers such as the esters of unsaturated acids, vinyl compounds, styrene-based materials, allyl compounds and other copolymerizable monomers. Other polyanhydrides can also be optionally utilized in the practice of this invention. Ester anhydrides can be prepared, as is known in the art, by the reaction of, e.g. trimellitic anhydride with polyols. Still other representative, suitable anhydrides include polyfunctional cyclic dianhydrides such as cyclopentane tetracarboxylic acid dianhydride, diphenyl-ether tetra-carboxylic acid dianhydride, 1, 2, 3, 4, -butane tetracarboxylic acid dianhydride, and the benzophenone tetracarboxylic dianhydrides, such as 3, 3', 4, 4' - benzophenone tetracarboxylic dianhydride, and 2-bromo-3, 3', 4, 4' - benzophenone tetracarboxylic acid dianhydride. Trianhydrides such as the benzene and cyclohexene hexacarboxylic acid trianhydrides are also useful. When the composition of the present invention can include an anhydride-functional compound along with the cycloaliphatic epoxy resins, the ratios of anhydride to epoxy groups can be widely varied to give any desired level of crosslinking. Typically, the anhydride should be present in an amount to provide at least about 0.01 anhydride groups for each epoxy group in the reactive coating. It is preferred, however, to provide from about 0.6 to about 12.0 epoxy groups for each anhydride group in the composition. For example, in the case where the composition contains chloredic anhydride and hexahydrophthalic anhydride in a weight ratio of about 40:60, it is preferred that the ratio of the weight of anhydride mixture to the combined weight of cycloaliphatic epoxy resins be from about 5 to about 25% and preferably from about 10 to about 15%.

A rheological control agent may preferably be added to the composition, for example by dissolution under agitation and heating in the resin. This rheological control agent may be chosen from among polyamide wax-based compounds or hydrogenated castor or urea oil. This is, for example a polyamide wax, such as the one marketed by the company Kusomoto Chemicals under the trade name "Disparlon 6650" or the one marketed by Cray Valley Ltd., Waterloo Works, Machen, Caerphilly, UK under the trade name "Cray Vallac Super," Cray Valley under the trade name "Cray Vallac Super," or the one marketed by the Cabosil Division of Cabot Corporation in Tuscola, IL under the trade name CabOSil T-720. Concentrations from about 2 to about 15% by mass with respect to the mass of the resin results in a fluid paste or gel to which the polymer particles are added. The paste obtained presents a high flow threshold and a low viscosity at high shear rates. The addition of this rheological control agent prevents sedimentation of the polymer particles during storage or formation which would lead to heterogeneity of the composition, primarily in the vertical direction, which during sintering would translate into differential shrinkage causing distortions or deformations.

This additive may be a so-called coupling agent compatible with the resin in order to avoid the formation of lumps, for example a silane type coupling agent such as the one marketed by the company Witco under the trade name "Silquest A-1120," in concentrations from about 0.1 to about 0.3% by mass with respect to the mass of the polymer particles.

This additive may also be a wetting and/or dispersant agent which modifies the surface tension of the liquid surface and/or creates a screen (electrostatic or steric) around the polymer particles in order to keep them separated from each other and avoid bonding problems which lead, in turn, to sedimentation of the particles. Such additives form strong interactions (such as chemical absorption) between the liquid and the powder. For example, this could be a wetting and dispersant agent, present in a concentration of under 1%, preferably below about 0.5% by weight with respect to the weight of the polymeric powder, such as those marketed by the company Lucas Meyer under the trade names "Forbest H60" and "Forbest 610" or that marketed by the company Byk Chemie under the trade name "BYK W-9010" or "Anti-Terra U100." Another suitable dispersant agent is "Disperbyk 162" marketed by Byk Chemie.

This additive may also be a lubricant, as is commonly used in the metal injection molding (MIM) process, such as stearic acid or the metallic derivatives of stearic acid. Such a lubricant, which has an action similar to that of a wetting/dispersant agent without, however, creating such strong interactions, permits the increase of the maximum volumetric concentration of the polymer particles in the composition. However, it must be noted that it significantly reduces the reactivity of the paste. It must be added in a low concentration: less than 0.5% with respect to the mass of the polymer particles.

This additive may also be an adhesive agent, such as a resin possessing a known adhesive power on metallic substrates. It may be added to the resin forming the bonding agent in order to improve the wetting between the binding agent and the polymer particles. As an example, this adhesive agent could be one of the resins marketed under the trade names "SR 705" (polyester acrylate), "SR 9050" (acid monoacrylate), "SR 9051" (acid triacrylate) or a blend thereof. It must be added in a low concentration: less than 0.5% with respect to the mass of the polymer particles.

### D. Formation of Three-Dimensional Composite Products

The formation of the three-dimensional composite product from the paste according to the invention, may be performed by a prototyping or rapid manufacturing machine ("OptoForm" type), such as the one described in French Patent Application No. 99 02719, filed by OptoForm SARL. The formation of the three-dimensional product is obtained by the placement by means of a recoater blade and the polymerization by means of ultraviolet light exposure of superimposed thin layers. Due to a reactivity lower than that of the resins traditionally used in stereolithography, with which the thickness of the polymerized layer allows for work with layers of a thickness equal to about 100 µm (or even thicker), the formation of a composite product from a paste composition according to the present invention is performed with a layer thickness of less than about 50 µm, varying for example from about 25 to about 50 µm depending on the type of polymer used in the curable paste. The speed of movement of the light may be similar to that used in stereolithography and thus reach several meters per second, since the fact that the layer is thinner does not prevent working at high speeds. Thus, with an "OptoForm" type machine, manufacturing times comparable to those of other rapid prototyping techniques can be achieved.

Considering the high viscosity of the curable paste, the average strength of the composite parts after polymerization and the low thickness of the layers used, it is necessary to generate specific supports when the layer just placed must present parts to be hardened which extend beyond the hardened portions of the lower layer. These specific supports are comprised of points, segments, lines, solidified surfaces (called support elements), distributed in the field formed by the layer placed in such a way that their density is such that, in a radius of less than 1.5 mm, there are at least two points pertaining to two distinct, solidified support elements. In comparison, in the case of uncharged liquid formulations, this density is generally greater than 2.5 mm, and often 10 mm.

Alternatively, the curable paste compositions of the present invention may be employed in direct composite manufacturing processes such as those shown in U.S. Pat. No. 6,110,409 (with Allanic et al. as named inventors) or in PCT Published Patent Application No. WO 00/51809 (with Allanic et al. as named inventors).

The present invention is further described in detail by means of the following Examples and Comparisons. All parts and percentages are by weight and all temperatures are degrees Celsius unless explicitly stated otherwise.

### EXAMPLES

### EXAMPLE 1

Near- or sub-micron particles which can be used as toughening fillers were formed by dissolving polycarbonate (Makrolon 5308 available from Bayer) in chloroform and then spray dried.

The equipment used was the Explosion Proof Mobil Minor Unit Spray Drier from Niro, Inc. of Columbia, Maryland, with the following technical specifications:

| | |
|---|---|
| Feed rate | Down to 0.5/hr |
| Evaporation rate | Up to 10 Kg/hr |
| Drying Medium | Air or Nitrogen |
| Max heating capability | 7.5 KW |
| Max. inlet temperature | 350°C |
| Post-processing of solvent | Carbon cartridge |
| Overall size | 3' x 3' x 6' high |

Six preliminary runs were conducted. The conditions and results of these six runs are as follows:

| | Run #1 | Run #2 | Run #3 | Run #4 | Run #5 | Run #6 |
|---|---|---|---|---|---|---|
| Cyclone inlet temperature (°C) | 150 | 120 | 100 | 100 | 100 | 100 |
| Cyclone outlet temperature (°C) | 63 | 63 | 63 | 62 | 61 | 61 |
| Atomization pressure (Bar) | 3 | 3 | 3 | 4 | 4 | 4 |
| Evaporation rate through filter (kg/hr) | 3.7 | | | | | |
| Starting solid content (%) | 5 | 5 | 5 | 5 | 3 | 1 |
| | | | | | | |

| Particle size distribution in **cyclone** | | | | | | |
|---|---|---|---|---|---|---|
| Dₚ10 (µm) | 8.23 | 4.53 | 3.62 | 2.11 | 2.06 | 1.79 |
| Dₚ50 (µm) | 20.99 | 13.66 | 8.53 | 6.58 | 3.95 | 3.06 |
| Dₚ90 (µm) | 39.11 | 26.20 | 22.34 | 16.01 | 4.81 | 8.62 |

| Particle distribution in **filter** | | | | | | |
|---|---|---|---|---|---|---|
| Dₚ10 (µm) | 0.93 | | | | | 1.02 |
| Dₚ50 (µm) | 1.14 | | | | | 1.17 |
| Dₚ90 (µm) | 4.96 | | | | | 2.10 |

Once further production run was run with the same materials and same equipment, the operating parameters were the same as Run #5 above. The result of this run area follows:

| | |
|---|---|
| Total solid in solution (feed) | 1048.5 g |
| Total time of production | 497 minutes |
| Particles collected in cyclone | 694 g |
| Particle collected in filter | 283 g |
| Total solid recovered | 977 g |
| Residual volatile | 4% |
| Solid yield (based on 4% residual volatile) | 93% |
| | |

| Yield rate in each segment | |
|---|---|
| Cyclone | 71% |
| Filter | 29 % |

The results of the trial run shows clearly that spray drying is capable of producing 1 to 5 micron particles with good yield.

### EXAMPLE 2

The polycarbonate particles made according to the runs in Example 1 could be functionalized to provide pendant acrylate and/or epoxy functionalities to the polycarbonate polymer particles. The functionalization can be carried out by exposing the spray dried particles under nitrogen atmosphere sufficient to e-beam or gamma radiation to extract labile hydrogen or methyl groups from the polycarbonate polymer chains. Then a liquid functional monomer or oligomer that has at least one acrylate functionality in addition to an acrylate or epoxy functionality is mixed with the exposed polycarbonate particles at ambient temperatures, preferably at a 1:1 molar ratio of total potential radicals on the polycarbonate to the available reactive acrylate or epoxy functions on each monomer or oligomer. An appropriate liquid functional monomer or oligomer is SR 349 available commercially from Cray Valley or Ebecryl 3605 available commercially from Radcure After a sufficient amount of time (generally about 1 hour or more), these functionalized polycarbonate particles are suitable for use in a curable paste composition.

### EXAMPLE 3

A curable paste composition useful for rapid prototype processes could be made using the polycarbonate particles of Example 1 with a combined photopolymerized hybrid acrylate/epoxy resin and photopolymer initiator (SOMOS 10120 available from DSM Desotech). Optionally, a dispersing agent (e.g., Bykanol available from Byk Chemie) and a rheological agent (Cab-O-Sil T-720 available from Cabot Corporation) may be used. These components may be mixed together to form a homogeneous paste in the following parts by weight:

| | |
|---|---|
| 5-50 parts | polycarbonate particles |
| 35-95 parts | SOMOS 10120 |
| 0-5 parts | Bykanol |
| 0-10 parts | Cab-O-Sil T720 |

After the curable past has been prepared, it may be used in the rapid prototype processes described above.

### EXAMPLE 4

A curable paste composition useful for rapid prototype processes could be made using the polycarbonate particles of Example 2 with a combined photopolymerized hybrid acrylate/epoxy resin and photopolymer initiator (SOMOS 10120 available from DSM Desotech). Optional a dispersing agent (e.g., Bykanol available from Byk Chemie) and a rheological agent (Cab-O-Sil T-720 available from Cabot Corporation). These components may be mixed together to form a homogeneous paste in the following parts by weight:

| | |
|---|---|
| 5-50 parts | functionalized polycarbonate particles |
| 35-95 parts | SOMOS 10120 |
| 0-5 parts | Bykanol |
| 0-10 parts | Cab-O-Sil T720 |

After the curable past has been prepared, it may be used in the rapid prototype processes described above.

While the invention has been described above with reference to specific embodiments thereof, it is apparent that many changes, modifications, and variations can be made without departing from the inventive concept disclosed herein. Accordingly, it is intended to embrace all such changes, modifications and variations that fall within the spirit and broad scope of the appended claims. All patent applications, patents and other publications cited herein are incorporated by reference in their entirety.

## Claims

1. A process for making small thermoplastic polymer particles comprising the steps of:
(1) dissolving at least one thermoplastic polymer in a solvent, wherein the solids content in the polymer solution is about 0.5% to about 10% by weight; and
(2) spray drying the polymer solution to form thermoplastic polymer particles having about 0.5 to about 10 microns average particle size.

2. The process of claim 1, further comprising the step of:
(3) reacting the spray dried thermoplastic polymer particles of step (2) with at least one functional monomer or oligomer to form a functionalized thermoplastic polymer.

3. The process of claim 1 or claim 2 wherein the thermoplastic polymer is selected from the group consisting of polycarbonate, polysulfone, polyamide, polyether imide, polyimide, polyphenylene sulfide and polyether ether ketone.

4. The process of any preceding claim wherein the thermoplastic polymer is in the form of pellets or flakes before the dissolving step (1).

5. The process of any preceding claim wherein the weight-average molecular weight (M_{w}) of the thermoplastic polymer before the dissolving step (1) is from about 20,000 to about 200,000.

6. The process of any preceding claim wherein the dissolving step (1) is conducted at ambient temperature with agitation of the solvent and the polymer.

7. The process of claim 2 or any of claims 3 to 6 when dependent upon claim 2, wherein the functionalized monomer or oligomer is selected from monomers or oligomers having acrylate, methacrylate, diacrylate, dimethacrylate, triacrylate, trimethacrylate or epoxy groups or mixtures thereof.

8. The process of claim 2 or any of claims 3 to 7 when dependent upon claim 2, wherein the reacting step (3) is conducted in the solvent using gamma radiation, or is conducted in a dry state using e-beam radiation.

9. A paste composition useful for a solid freeform fabrication procedure, comprising:
(a) a solidifiable binding agent comprised of at least one polymerizable resin, with a viscosity of less than 4000 mPa.s, measured at 25°C;
(b) at least one initiator, in a concentration greater than 0.1% by mass with respect to the mass of the resin; and
(c) thermoplastic polymer particles prepared according to any preceding claim, having an average particle size of about 0.5 to about 10 microns, said polymer present in a concentration from about 5 to about 50 percent by weight of the resin.

10. The composition according to claim 9, wherein the resin does not contain a benzene ring.

11. The composition according to claim 9, wherein the resin is a photopolymer.

12. The composition according to claim 11, wherein the resin is an acrylate type resin, preferably a ditrimethylol propane tetraacrylate resin.

13. The composition according to any of claims 9 to 12, wherein it additionally includes at least one of the following additives:
(a) a rheological control agent dissolved in the resin in a concentration of about 2 to about 15% by weight with respect to the weight of the resin;
(b) a reactive or non-reactive diluent with a viscosity less than 100 mPa.s, in a concentration from about 2 to about 20% by weight with respect to the weight of the resin;
(c) an agent dissolved or not in the resin, allowing for the increase of the composition's reactivity with respect to illumination;
(d) a coupling agent in concentrations from about 0.1 to about 0.3% by weight with respect to the mass of the polymer particles;
(e) a wetting and/or dispersant agent in a concentration of less than about 1% by weight with respect to the weight of the polymer powder;
(f) a lubricant in a concentration of less than about 0.5% by weight with respect to the mass of the polymer particles;
(g) a thermal initiator;
(h) an adhesive agent;
(i) a cross-linking agent; or
(j) an activation agent.

14. The composition according to any of claims 9 to 13, wherein the initiator is a photoinitiator or a thermal initiator.

15. A composition according to claim 14, wherein the photoinitiator is 2-benzyl-2-dimethylamino-1-(4-morpholinophenyl)-butanone-1.

16. The composition according to claim 15, wherein it includes an activation agent such as isopropyl thioxanthone, 1-chloro-4-propoxythioxanthone, or 4-benzoyl-4'methyldiphenyl sulfide, or a blend of at least two thereof, in combination with a co-initiator such as ethyl p-dimethylaminobenzoate.

17. The composition according to claim 14, wherein the initiator is a thermal initiator, and the resin is an epoxy with a protected amine group.

18. The composition according to any of claims 9 to 17 further including a cross-linking agent.

19. The composition according to claim 18, wherein the cross-linking agent is an anhydride, and is selected from the group consisting of dianhydrides of diacids, polyanhydrides, polymeric anhydrides and combinations thereof.
